# FASCICULE DE BREVET EUROPEEN

(11) **EP 3 204 923 B1**
(45) Date de publication et mention de la délivrance du brevet: **18.09.2019**
(21) Numéro de dépôt: 15775241.1
(22) Date de dépôt: 08.10.2015
(51) Int. Cl.: G07D 11/00, B65G 51/26, G07D 13/00

(54) **BORNE DE PEAGE ET SYSTEME AUTOMATIQUE DE TRANSPORT PNEUMATIQUE DE CARTOUCHES COMPRENANT LA BORNE**
ZAHLUNGSENDGERÄT UND AUTOMATISCHES SYSTEM ZUM PNEUMATISCHEN TRANSPORT VON KASSETTEN MIT DEM ENDGERÄT
PAYMENT TERMINAL AND AUTOMATIC SYSTEM FOR PNEUMATICALLY TRANSPORTING CARTRIDGES COMPRISING THE TERMINAL

(30) Priorité: 10.10.2014 BE 201400759
(43) Date de publication de la demande: 16.08.2017
(73) Titulaire: C.P. Bourg S.A., 1490 Court-Saint-Etienne (BE)
(72) Inventeur: COLLE, Franck, B-6280 Gerpinnes (BE)
(74) Mandataire: Office Kirkpatrick
(86) Numéro de dépôt international: PCT/EP2015/073273
(87) Numéro de publication internationale: WO 2016/055575

(56) Documents cités:
- WO-A1-93/16943
- FR-A1- 2 837 480
- US-A- 5 356 243
- US-B1- 7 341 406

## Description

Le domaine de l'invention est essentiellement, mais non exclusivement, le péage par pièces ou jetons de paiement qu'on introduit, voire même qu'on jette, à des bornes de péage dans des cartouches. Il faut alimenter les bornes en cartouches vides, généralement à partir d'un stockeur de cartouches, et les cartouches pleines doivent être évacuées sur un poste sécurisé de stockage temporaire des pièces et jetons, de type coffre-fort notamment, où elles sont vidées. Le transport des cartouches, vides ou pleines, s'effectue dans une ligne de tubes cylindriques de transport pneumatique. Les cartouches sont conformées en conséquent et sont donc également cylindriques, d'un diamètre externe sensiblement égal au diamètre interne des tubes de transport.

Le document WO93/16943 divulgue un transporteur par tube pneumatique comportant: une station d'envoi (12) au niveau de laquelle un porteur (14) pénètre dans le transporteur, et un tube transporteur allongé (11) s'étendant depuis la station d'envoi et dans lequel est véhiculé le porteur. Une région tubulaire située dans la station d'envoi comporte un espace vide allongé (21) dans sa paroi, dont la longueur correspond à la largueur du porteur, la station d'envoi possédant un élément d'admission espacé latéralement de l'axe de ladite région tubulaire afin de permettre l'introduction d'un porteur. La station d'envoi est conçue pour transporter un porteur introduit par l'élément d'admission, latéralement par rapport à l'axe de la région tubulaire, et pour permettre l'introduction du porteur dans une orientation essentiellement parallèle à l'axe de la région tubulaire par l'espace vide, pour faire entrer ledit porteur dans ladite région tubulaire. Le document US5356243 divulgue un système de transport pneumatique avec une section de tube de transport verticale qui pivote autour d'un axe horizontal supérieur pour déplacer la cartouche entre la position verticale d'envoi / réception et une position de présentation oblique mais généralement verticale.

De tels systèmes de transport pneumatique peuvent être implantés dans des barrières de péage d'autoroute, qui sont pourvues de galeries techniques à cet effet. Si le péage autoroutier est donc une application fondamentale de l'invention de la présente demande, ce n'est assurément pas une application qu'il faut considérer comme limitative. Partout où des clients ou usagers doivent payer avec des pièces ou des jetons, ou tous autres moyens de paiement d'un certain poids et susceptibles d'une chute libre, l'invention peut être envisagée. Il en est ainsi des zones de parking, des grandes surfaces commerciales, des casinos, etc.

Par construction, les cartouches sont entraînées en déplacement dans les tubes dans une direction parallèle à leur axe, direction qui est en général horizontale.

Mais à une borne de péage, en position d'utilisation, c'est-à-dire de réception de pièces, la cartouche doit avoir son axe vertical pour que les pièces puissent entrer dans la borne par gravité. C'est en tout cas la disposition adaptée dans les systèmes existants.

L'adoption de goulottes ou autres dispositifs particuliers d'introduction de pièces est exclue pour des raisons d'encombrement et de coût.

Les systèmes actuellement installés ou proposés, et ils le sont depuis fort longtemps - trente ans ou plus -, prévoient donc, à l'approche d'une borne de péage, un basculement de l'axe des cartouches en position verticale par l'intermédiaire d'une portion courbe de la ligne de tubes, d'un rayon de courbure forcément non négligeable, compte tenu du diamètre des tubes utilisés.

Cette courbure de la ligne de transport à l'entrée des bornes de péage pose deux problèmes.

Le premier est relatif à l'encombrement des bornes dans lesquelles on doit pouvoir loger une partie de la portion de courbe. Il est fait ici essentiellement référence à l'encombrement vertical et c'est un gros inconvénient quand les galeries techniques ne peuvent pas être trop enterrées.

Le deuxième problème est l'usure de ces portions courbes de ligne inexorablement provoqué par les passages répétés des cartouches.

L'invention de la présente demande vise donc à proposer un système dans lequel les portions courbes de ligne de transport pneumatique de cartouches à l'approche des bornes de péage ont disparu.

L'invention est définie par la revendication 1.

L'invention est remarquable par le fait que c'est au terme d'une très longue période de basculement partiel et progressif de l'axe des cartouches qu'on a osé proposer un basculement pur et simple des cartouches elles-mêmes à l'intérieur des bornes de péage, gagnant ainsi beaucoup de place au niveau des bornes et assurant un meilleur transport des cartouches entre les différents postes de traitement.

Par positions ou directions horizontale et verticale de l'axe des cartouches, on doit entendre des directions qui pourraient ne pas être rigoureusement horizontale ou verticale, selon les contraintes de mise en oeuvre des équipements.

Dans la forme de réalisation préférée de la borne de l'invention, les moyens de réception de cartouche comportent un cadre monté rotatif sous l'action de moyens moteurs ; avantageusement, l'entraînement en rotation du cadre s'effectue par l'intermédiaire d'un engrenage à roues dentées.

De préférence encore, le port d'entrée / sortie de cartouche est équipé d'une soupape d'évacuation d'air prévue pour diminuer le débit d'air et donc amorcer le freinage de la cartouche à son arrivée dans la borne.

Avantageusement encore, les moyens de réception de cartouche sont agencés pour freiner la cartouche à l'aide par exemple de moyens d'échappement d'air et de moyens d'amortissement mécanique.

Comme il faut prévoir une temporisation entre l'évacuation d'une cartouche pleine hors de la borne et l'admission dans la borne d'une nouvelle cartouche vide, on peut prévoir, dans les moyens de réception des moyens de paiement de la borne de péage, des moyens de rétention des moyens de paiement agencés pour empêcher le passage de ces moyens de paiement vers les moyens de réception de cartouche et inhiber ainsi les moyens de mise en communication des moyens de réception des moyens de paiement et de l'intérieur d'une cartouche.

L'invention concerne également un système automatique de transport pneumatique de cartouches cylindriques, de réception par gravité de pièces de monnaie par une ligne de tubes cylindriques reliant au moins une borne de péage et de réception de pièces de monnaie et une station d'entrée / sortie de cartouches, caractérisé par le fait que la ligne de tubes est raccordée à la borne de péage par une portion de ligne d'axe horizontal et la borne de péage comporte des moyens agencés pour basculer les cartouches d'une position d'axe horizontal à une position d'axe vertical.

Par station d'entrée / sortie de cartouches, on peut entendre une station dans laquelle des cartouches, vides ou pleines, sont empilées les unes sur les autres, pour servir de source d'alimentation ou de stockage avant vidage des cartouches. Il peut aussi s'agir d'un stockeur de recettes ou du coffre sécurisé. Bref, il s'agit de tout coffret ou armoire qu'on peut trouver sur une aire automatisée de voies tous paiements (VTP).

L'invention sera mieux comprise à l'aide de la description suivante de la forme de réalisation préférée de la borne et du système de l'invention, en référence au dessin en annexe, sur lequel :
- la figure 1 est une vue en perspective à grande échelle d'une cartouche de réception de pièces de monnaie destinée à être transportée pneumatiquement jusqu'à une borne de péage du système de transport pneumatique de l'invention ;
- la figure 2 est une vue, à plus petite échelle, des différents organes et dispositifs de la forme de réalisation préférée de la borne de péage de l'invention, juste avant l'arrivée, ou juste après l'évacuation, de la cartouche de la figure 1 ;
- la figure 3 est une vue de la borne de la figure 2, après réception de la cartouche dans le cadre de positionnement basculant ;
- la figure 4 est une vue, à plus grande échelle, du cadre de positionnement basculant de la borne de la figure 3, en position horizontale ;

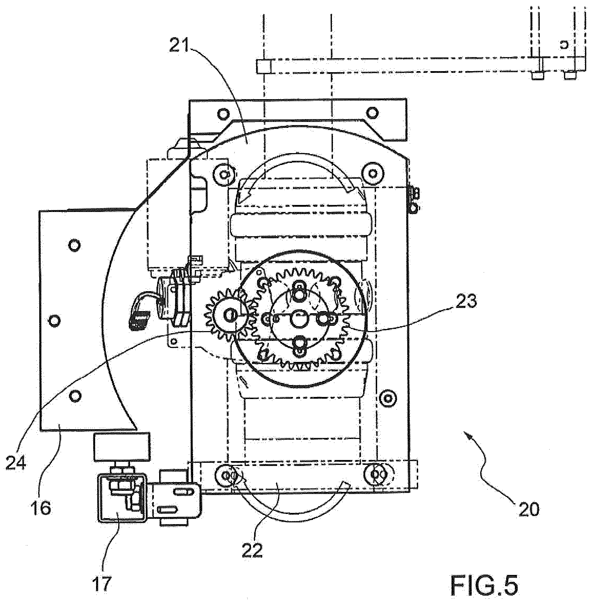

- la figure 5 est une vue du cadre de la figure 4 en position verticale ;
- la figure 6 est une vue de la borne de la figure 2, le cadre basculant en position verticale et la cartouche en position ouverte de réception des pièces de monnaie et
- la figure 7 est une vue en coupe, à grande échelle, des moyens de rétention des pièces de monnaie.

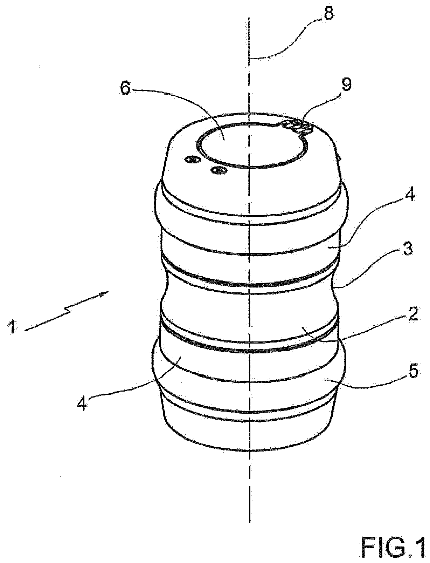

Les cartouches utilisées dans le système automatique de transport pneumatique de cartouches de l'invention, dont celle représentée sur la figure 1, sont des éléments tubulaires cylindriques 1. L'élément 1 comprend un corps cylindrique central 2, avec, en partie médiane, une gorge annulaire 3, à peine creusée, pour la préhension de la cartouche par un opérateur. Le corps central 2 se prolonge axialement des deux côtés par un couvercle 4 qui, ici, se visse sur le corps central 2.

Sur la paroi extérieure de chaque couvercle 4 est fixé un joint annulaire 5 pour permettre le transport de la cartouche dans la ligne de tubes du système sous l'action de la pression pneumatique.

Chaque couvercle 4 est pourvu d'un clapet d'ouverture 6 monté pivotant contre l'action d'un ressort de rappel autour d'un petit axe orthogonal à l'axe 8 de la cartouche par l'intermédiaire d'une barrette de pivotement 9. En position de repos, chaque clapet 6 obture le couvercle 4 sur lequel il est monté et s'étend dans le plan de bout perpendiculaire à l'axe de cartouche 8.

Les clapets 6 ont une forme de disque circulaire prolongé par la petite barrette de pivotement 9.

Le diamètre des disques correspond sensiblement au diamètre extérieur d'un coulisseau d'admission de pièces dont il sera question ci-après et à travers lequel les pièces de monnaie peuvent s'écouler par gravité. Quand ce coulisseau est descendu, au cours de sa course, il fait pivoter le clapet 6, du dessus de la cartouche en position verticale, vers l'intérieur de la cartouche pour s'introduire dans la cartouche et permettre ainsi son remplissage, c'est-à-dire la « récolte » des pièces.

C'est la raison pour laquelle les clapets d'ouverture 6 sont qualifiés de clapets automatiques.

On notera que la cartouche est symétrique par rapport à un plan médian perpendiculaire à son axe 8 pour permettre son positionnement dans la borne de péage dans les deux sens et éviter ainsi de devoir prévoir des organes de détrompage.

On notera encore que les cartouches ont une longueur adaptée aux courbes de la ligne de tubes.

Enfin, et à titre purement indicatif pour fixer les idées, on peut indiquer ici que les cartouches utilisées peuvent recevoir entre 200 et 250 pièces.

Va maintenant être décrite la borne de péage 60 de l'invention, que l'homme du métier peut aussi appeler « station VTP automatique », VTP signifiant « voie tous paiements ».

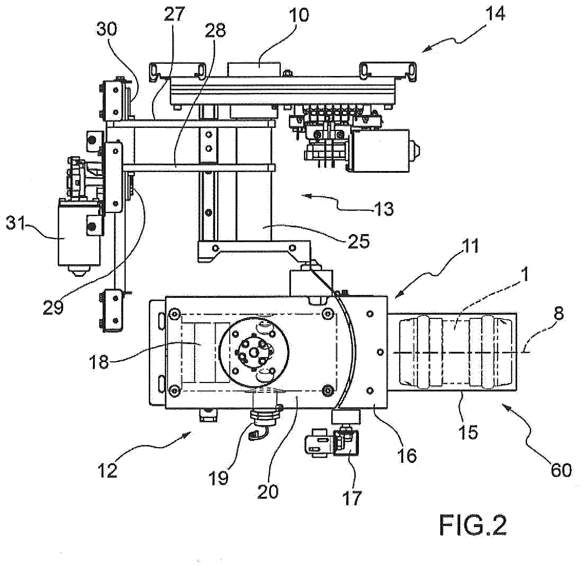

La borne de la figure 2 comporte une goulotte 10 de réception ici de pièces de monnaie, un port 11 d'entrée / sortie d'une cartouche, un coffret 12 de réception et positionnement de cartouche, un coulisseau 13 d'admission de pièces, et donc de mise en communication de la goulotte 10 avec l'intérieur d'une cartouche 1 et un clapet 14 de rétention des pièces de monnaie.

La goulotte 10 est l'élément final des moyens de réception des pièces qui comportent, en entrée, un cône de réception, non représenté au dessin.

### Le port d'entrée / sortie de cartouche

Le port 11 est l'orifice du coffret 12 par lequel le tube 15 de la ligne de tubes se raccorde au coffret 12 et donc à la borne.

En premier lieu, on remarquera que le tube 15, dans sa portion de raccordement au moins, s'étend sensiblement horizontalement, sans occuper la moindre place sous le coffret 12.

C'est par le tube 15 qu'une cartouche 1, vide, est propulsée dans la borne avant d'en être évacuée, une fois remplie de pièces.

À l'entrée du coffret 12, est montée sur un flasque 16 une soupape d'air mécanique 17 permettant une certaine évacuation d'air et donc une diminution du débit d'air pour amorcer le freinage de la cartouche 1 à son arrivée dans la borne.

### Le coffret de réception et positionnement de la cartouche

Le coffret 12 assure ici trois fonctions.

La première fonction est le freinage de la cartouche. À cet effet, le coffret 12 est équipé d'un bloc 18, d'une mousse à mémoire bi-composant qui permet de freiner la cartouche en amortissant le choc et en minimisant le bruit d'impact de la cartouche dans la borne. Lors de l'arrivée de la cartouche 1 dans le coffret 12, l'air est évacué dans le tube d'arrivée 15. En effet, celui-ci est pourvu d'orifices, non visibles, sur toute sa circonférence de manière à évacuer l'air de manière optimale.

La deuxième fonction du coffret 12 est la détection de la cartouche 1 dans la borne. Le coffret 12 est équipé d'une cellule optique à réflexion 19 qui permet de détecter la présence d'une cartouche dans la borne. Lors de l'arrivée d'une cartouche 1 dans la borne, c'est cette cellule optique 19 qui indique que la cartouche est arrivée dans la borne et que l'admission d'air peut être interrompue.

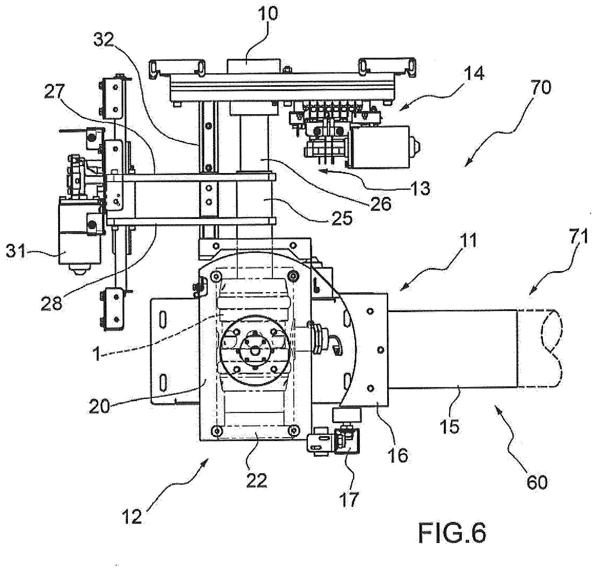

La troisième fonction est le positionnement de la cartouche en vue de son ouverture pour recevoir les pièces de monnaie. La borne reçoit la cartouche 1 en position d'axe horizontal (figure 2) et un cadre 20 permet de basculer la cartouche 1 en position d'axe vertical (figure 6).

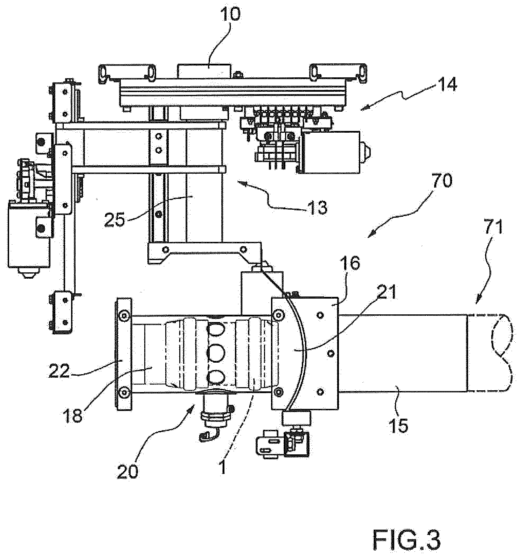

Le cadre 20, qu'on voit mieux sur la figure 3, est monté rotatif et comporte donc un secteur arqué 21 coopérant en rotation avec la plaque 16 conformée en conséquence, le secteur 21 étant prolongé par un châssis 22 de réception de la cartouche 1.

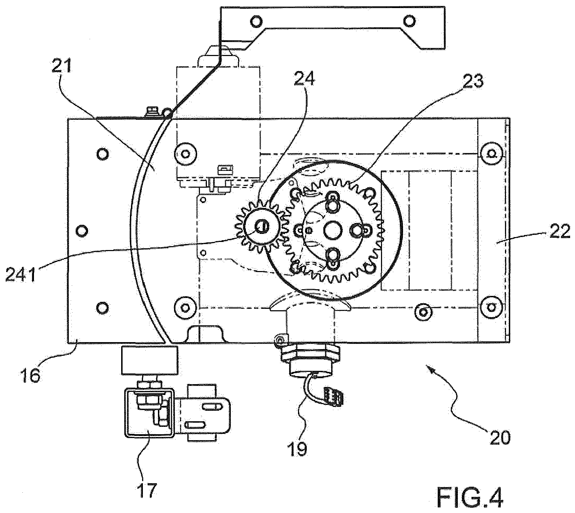

La rotation du cadre 20 s'effectue au moyen (figure 4) d'un engrenage comportant une roue dentée 23 fixée au châssis 22 et une roue dentée 24 montée sur l'axe 24 d'un moteur d'entraînement, non représenté au dessin.

Le basculement du cadre 20 et de la cartouche permet de profiter de la gravité pour la récole des pièces. Grâce à ce basculement, on gagne beaucoup de place au montage de la borne, sans la moindre portion de ligne de tubes courbe en-dessous de la borne, comme dans celle de l'art antérieur. L'encombrement de la borne de l'invention est particulièrement réduit.

Les positionnements horizontal et vertical du cadre 20 peuvent être déterminés par des contacts Reed étanches, qui sont des contacts fin de course à durée de vie plus grande que celle des contacts mécaniques classiques.

### Le coulisseau d'admission de pièces

Le coulisseau 13 proprement dit est en fait un coulisseau télescopique avec un tube extérieur 25 monté coulissant sur un tube intérieur fixe 26, ici fixé dans le clapet de rétention 14.

Le coulissement du tube extérieur 25 s'effectue par l'intermédiaire ici d'un châssis à deux bras 27, 28 aux extrémités intérieures desquels est fixé ce tube extérieur 25 et l'un des bras 28 portant à son extrémité extérieure une roue dentée 29, coopérant avec une crémaillère 30. La roue dentée 29 est entraînée en rotation par un moteur 31. Il est ici aussi prévu des fins de course de type Reed.

Le coulisseau d'admission de pièces assure deux fonctions.

La première fonction est l'ouverture de la cartouche automatique 1. Lorsque la cartouche 1 est en position verticale dans le coffret 12, le processeur de la borne commande la descente du tube extérieur 25 du coulisseau dans la cartouche. Cette descente provoque l'ouverture du clapet 6 de la cartouche 1.

Lorsque la cartouche 1 a reçu le nombre de pièces adéquat, selon une information communiquée par le processeur de la borne, le processeur commande la remontée du tube extérieur du coulisseau, ce qui provoque la fermeture de la cartouche automatique 1.

Le tube extérieur 25 du coulisseau est guidé par un rail 32 de guidage linéaire de manière à garantir un mouvement rectiligne pendant le mouvement.

La deuxième fonction du coulisseau 13 est l'acheminement des pièces vers la cartouche automatique 1. Le tube extérieur du coulisseau prolonge le tube fixe dans la cartouche. Choisir un tube de diamètre plus important pour la partie coulissante permet un guidage continu des pièces et cela sans aucune aspérité qui pourrait faire obstruction au passage des pièces de monnaie.

### Le clapet de rétention des pièces de monnaie

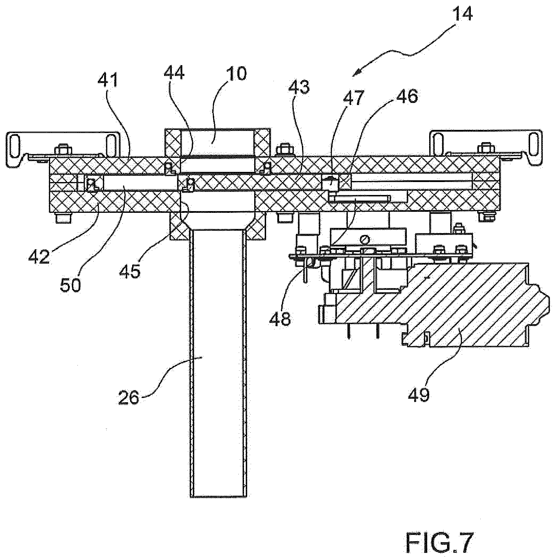

Entre la goulotte 10 de réception des pièces de monnaie et le tube intérieur fixe 26 du coulisseau d'admission de pièces s'étend (figure 7), perpendiculairement au tube 26, un ensemble de deux plaques 41, 42, fixées parallèlement l'une à l'autre et espacées d'une distance sensiblement égale à l'épaisseur d'un clapet 43 monté coulissant en translation dans l'intervalle 50 ainsi ménagé entre les deux plaques. Ces deux plaques 41, 42 sont percées respectivement de deux orifices 44, 45 au droit de la goulotte 10 et du tube intérieur 26 du coulisseau pour permettre la communication de la goulotte 10 avec le tube intérieur 26 du coulisseau.

Le clapet 43 comporte un alésage rectiligne 46 de réception d'un galet 47 monté en bout d'une manivelle 48 montée rotative sous l'action d'un moteur de clapet 49. Quand la manivelle 48 est entraînée en rotation par le moteur 49, son galet d'extrémité 47 se déplace dans l'alésage 46 en entraînant le clapet 43 en déplacement dans l'intervalle 50, soit pour obturer les orifices 44, 45 et donc interrompre la communication entre la goulotte 10 et le tube intérieur 26 du coulisseau en position fermée, soit pour dégager les orifices et autoriser la communication entre la goulotte et le tube intérieur du coulisseau, en position ouverte.

On rappellera que la fonction du clapet de rétention 14 est indispensable car, lors du retour d'une cartouche pleine vers la zone de stockage, il faut attendre le temps de transport de la cartouche pleine dans un sens et le temps de transport d'une cartouche vide dans le sens inverse avant de pouvoir « jeter » à nouveau des pièces dans la cartouche vide correctement positionnée dans la borne de péage. Pendant ces deux temps, le clapet doit être en position fermée et les pièces stockées dans une zone tampon en amont et non représentée au dessin.

Ici encore, on peut prévoir des fins de course de type Reed.

La borne de péage 60 qui vient d'être décrite fait partie d'un système automatique 70 de transport pneumatique de cartouches cylindriques 1, de réception par gravité des pièces de monnaie, par une ligne de tubes cylindriques 71 reliant la borne 60, et d'autres, et au moins une station d'entrée / sortie de cartouches et un stockeur de recettes.

De la ligne de tubes, on n'a représenté au dessin que le tube 15 qui se raccorde à la borne 60.

## Revendications

1. Borne de péage (60) d'un système (70) de transport pneumatique de cartouches cylindriques (1) par ligne de tubes cylindriques (71) comprenant:
- une cartouche (1) destinée à recevoir les moyens de paiement,
- des moyens (10) de réception de moyens de paiement susceptibles d'une chute libre,
- un port (11) d'entrée / sortie d'une cartouche (1) destinée à recevoir les moyens de paiement par gravité,
- des moyens (12) de réception d'une cartouche (1) et
- des moyens (13) de mise en communication des moyens (10) de réception des moyens de paiement et l'intérieur d'une cartouche (1),
- le port d'entrée / sortie (11) est agencé pour le passage d'une cartouche (1) en position d'axe (8) horizontal et
- les moyens de réception de cartouche (12) sont agencés pour basculer la cartouche (1) en position d'axe (8) vertical,
- le port (11) d'entrée / sortie est l'orifice des moyens (12) de réception par lequel un tube (15) de la ligne de tubes cylindriques (71) se raccorde aux moyens (12) de réception et donc à la borne (60),
- moyennant ce tube (15) une cartouche (1) vide est propulsée dans la borne avant d'en être évacuée par ledit port (11) d'entrée / sortie, une fois remplie de moyens de paiement.

2. Borne de péage selon la revendication 1, dans laquelle les moyens de réception de cartouche (12) comportent un cadre (20) monté rotatif sous l'action de moyens moteurs (24).

3. Borne de péage selon la revendication 2, dans laquelle l'entraînement en rotation du cadre (20) s'effectue par l'intermédiaire d'un engrenage à roues dentées (23, 24).

4. Borne de péage selon l'une des revendications 1 à 3, dans laquelle le port (11) d'entrée / sortie de cartouche (1) est équipé d'une soupape d'évacuation d'air (17) prévue pour diminuer le débit d'air et donc amorcer le freinage de la cartouche (1) à son arrivée dans la borne.

5. Borne de péage selon l'une des revendications 1 à 4, dans laquelle les moyens (12) de réception de cartouche sont agencés pour freiner la cartouche.

6. Borne de péage selon la revendication 5, dans laquelle il est prévu, dans les moyens de réception de cartouche (12), des moyens (17) d'échappement d'air pour freiner la cartouche (1).

7. Borne de péage selon l'une des revendications 5 et 6, dans laquelle il est prévu, dans les moyens de réception de cartouche (12), un bloc (18), d'une mousse à mémoire bi-composant pour freiner la cartouche (1).

8. Borne de péage selon l'une des revendications 1 à 7, dans laquelle il est prévu, dans les moyens (10) de réception des moyens de paiement, des moyens (14) de rétention des moyens de paiement agencés pour empêcher le passage de ces moyens de paiement vers les moyens de réception (12) de cartouche et inhiber ainsi les moyens (13) de mise en communication des moyens (10) de réception des moyens de paiement et de l'intérieur d'une cartouche (1).

9. Borne de péage selon l'une des revendications 1 à 8, dans laquelle lesdits moyens de mise en communication (13) comportent un coulisseau télescopique (25, 26).

10. Borne de péage selon l'une des revendications 1 à 9, dans laquelle il est prévu, dans lesdits moyens de rétention (14), un clapet (43) monté coulissant entre les moyens (10) de réception des moyens de paiement et lesdits moyens de mise en communication (13).

11. Système automatique (70) de transport pneumatique de cartouches (1) cylindriques, de réception par gravité de pièces de monnaie, par une ligne (71) de tubes cylindriques reliant au moins une borne de péage (60) selon l'une des revendications précédentes et de réception de pièces de monnaie et une station d'entrée / sortie de cartouches, **caractérisé par le fait que** la ligne de tubes (71) est raccordée à la borne de péage (60) par une portion de ligne (15) d'axe (8) horizontal et la borne de péage (60) comporte des moyens (12, 20) agencés pour basculer les cartouches (1) d'une position d'axe (8) horizontal à une position d'axe (8) vertical.

## Patentansprüche

1. Zahlungsendgerät (60) eines Systems (70) zum pneumatischen Transport zylindrischer Kassetten (1) über einen Strang zylindrischer Rohre (71), umfassend:
- eine Kassette (1), die dafür bestimmt ist, die Zahlungsmittel zu empfangen,
- Empfangsmittel (10) von Zahlungsmitteln, die für einen freien Fall geeignet sind,
- einen Eingangs-/Ausgangsanschluss (11) einer Kassette (1), die dafür bestimmt ist, die Zahlungsmittel durch Schwerkraft zu empfangen,
- Empfangsmittel (12) einer Kassette (1) und
- Mittel (13) zum Inverbindungsetzen der Empfangsmittel (10) der Zahlungsmittel mit dem Inneren einer Kassette (1),
- der Eingangs-/Ausgangsanschluss (11) ist angeordnet für den Durchgang einer Kassette (1) in Horizontalachsenposition (8) und
- die Kassettenempfangsmittel (12) sind angeordnet, um die Kassette (1) in Vertikalachsenposition (8) zu kippen,
- der Eingangs-/Ausgangsanschluss (11) ist die Öffnung der Empfangsmittel (12), durch den sich ein Rohr (15) des Stranges zylindrischer Rohre (71) an die Empfangsmittel (12) und somit an das Endgerät (60) anschließt,
- mittels dieses Rohres (15) wird eine leere Kassette (1) im Endgerät vorangetrieben, bevor sie daraus durch den Eingangs-/Ausgangsanschluss (11) ausgestoßen wird, sobald sie voller Zahlungsmittel ist.

2. Zahlungsendgerät nach Anspruch 1, wobei die Kassettenempfangsmittel (12) einen Rahmen (20) einschließen, der unter der Einwirkung der Motormittel (24) drehend montiert ist.

3. Zahlungsendgerät nach Anspruch 2, wobei der drehende Antrieb des Rahmens (20) mit Hilfe eines Zahnradgetriebes (23, 24) ausgeführt wird.

4. Zahlungsendgerät nach einem der Ansprüche 1 bis 3, wobei der Eingangs-/Ausgangsanschluss (11) einer Kassette (1) mit einem Entlüftungsventil (17) ausgestattet ist, das vorgesehen ist, um den Luftdurchsatz zu verringern und somit das Bremsen der Kassette (1) bei ihrer Ankunft im Endgerät einzuleiten.

5. Zahlungsendgerät nach einem der Ansprüche 1 bis 4, wobei die Kassettenempfangsmittel (12) angeordnet sind, um die Kassette zu bremsen.

6. Zahlungsendgerät nach Anspruch 5, wobei in den Kassettenempfangsmitteln (12) Luftauslassmittel (17) vorgesehen sind, um die Kassette (1) zu bremsen.

7. Zahlungsendgerät nach einem der Ansprüche 5 und 6, wobei in den Kassettenempfangsmitteln (12) ein Block (18) mit Zweikomponenten-Gedächtnisschaumstoff vorgesehen ist, um die Kassette (1) zu bremsen.

8. Zahlungsendgerät nach einem der Ansprüche 1 bis 7, wobei in den Empfangsmitteln (10) der Zahlungsmittel Mittel (14) zum Zurückhalten der Zahlungsmittel vorgesehen sind, die angeordnet sind, um den Durchgang dieser Zahlungsmittel hin zu den Kassettenempfangsmitteln (12) zu verhindern und so die Mittel (13) zum Inverbindungsetzen der Empfangsmittel (10) der Zahlungsmittel mit dem Inneren einer Kassette (1) zu hemmen.

9. Zahlungsendgerät nach einem der Ansprüche 1 bis 8, wobei die Mittel zum Inverbindungsetzen (13) einen teleskopischen Schieber (25, 26) einschließen.

10. Zahlungsendgerät nach einem der Ansprüche 1 bis 9, wobei in den Rückhaltemitteln (14) eine Klappe (43) vorgesehen ist, die zwischen den Empfangsmitteln (10) der Zahlungsmittel und den Mitteln zum Inverbindungsetzen (13) verschiebbar montiert ist.

11. Automatisches System (70) zum pneumatischen Transport zylindrischer Kassetten (1), zum Empfang von Geldstücken durch Schwerkraft, über einen Strang (71) zylindrischer Rohre, der mindestens ein Zahlungsendgerät (60) nach einem der vorstehenden Ansprüche und Geldstückempfangsendgerät und eine Eingangs-/Ausgangsstation von Kassetten verbindet, **dadurch gekennzeichnet, dass** der Strang Rohre (71) an das Zahlungsendgerät (60) über einen Abschnitt eines Stranges (15) einer Horizontalachse (8) angeschlossen ist und das Zahlungsendgerät (60) Mittel (12, 20) einschließt, die angeordnet sind, um die Kassetten (1) von einer Horizontalachsenposition (8) in eine Vertikalachsenposition (8) zu kippen.

## Claims

1. A toll terminal (60) of a pneumatic conveying system (70) of cylindrical cartridges (1) by line of cylindrical tubes (71) comprising:
- a cartridge (1) intended to receive the means of payment,
- means (10) for receiving means of payment susceptible to a free fall,
- a cartridge (1) input / output port (11) intended to receive the means of payment by gravity,
- means (12) for receiving a cartridge (1) and,
- means (13) for providing connection between the means (10) for receiving the means of payment and the inside of a cartridge (1),
- the input / output port (11) is arranged for the passage of a cartridge (1) in an horizontal axis (8) position and
- the cartridge receiving means (12) are arranged to tilt the cartridge to a vertical axis (8) position,
- the input / output port (11) is the orifice of the receiving means (12) through which a tube (15) of the line of cylindrical tubes (71) is connected to the receiving means (12) and thus to the terminal (60),
- With said tube (15), an empty cartridge (1) is propelled into the terminal before being evacuated by said input / output port (11), once filled with means of payment.

2. The toll terminal according to claim 1, wherein the cartridge receiving means (12) comprise a frame (20) rotatably mounted under the action of driving means (24).

3. The toll terminal according to claim 2, wherein the rotation of the frame (20) is effected by means of a gear with cog-wheels (23,24).

4. The toll terminal according to one of claim 1 to 3, wherein the cartridge (1) input / output port (11) is equipped with an air exhaust valve (17) intended to reduce the air flow and thus initiate the braking of the cartridge (1) on arrival in the terminal.

5. The toll terminal according to one of claim 1 to 4, wherein the cartridge receiving means (12) are arranged to brake the cartridge.

6. The toll terminal according to claim 5, wherein there is provided in the cartridge receiving means (12), means (17) for exhausting air to brake the cartridge (1).

7. The toll terminal according to one of claim 5 and 6, wherein there is provided in the cartridge receiving means (12), a block (18), of a bi-component memory foam for braking the cartridge (1).

8. The toll terminal according to one of claims 1 to 7, wherein there is provided in the means (10) for receiving means of payment, means (14) for retaining means of payment arranged to prevent the passage of these means of payment to the cartridge receiving means (12) and thus to inhibit the means (13) for providing connection between means (10) for receiving means of payment and for the inside of a cartridge (1) .

9. The toll terminal according to one of claims 1 to 8, wherein said communication means (13) comprise a telescopic slide (25,26).

10. The toll terminal according to one of claims 1 to 9, wherein there is provided, in said retaining means (14), a valve (43) slidably mounted between the means (10) for receiving the means of payment and said communication means (13).

11. An automatic system (70) of pneumatic conveyance of cylindrical cartridges (1), for receiving coins by gravity, by a line (71) of cylindrical tubes connected to at least one toll terminal (60) according to one of the preceding claims and for receiving coins, and an input / output cartridge station, **characterized in that** the line of tubes (71) is connected to the toll terminal (60) by an horizontal axis (8) line segment (15) and the toll terminal (60) comprises means (12,20) arranged for tilting the cartridges (1) from an horizontal axis (8) position to a vertical axis (8) position.
